# EUROPEAN PATENT SPECIFICATION

(11) **EP 2 904 342 B1**
(45) Date of publication and mention of the grant of the patent: **03.08.2016**
(21) Application number: 12772765.9
(22) Date of filing: 08.10.2012
(51) Int. Cl.: F27B 21/06, F27D 99/00, F27B 21/08

(54) **MACHINE FOR THE THERMAL TREATMENT OF BULK MATERIAL**
MASCHINE ZUR WÄRMEBEHANDLUNG VON SCHÜTTGÜTERN
MACHINE POUR LE TRAITEMENT THERMIQUE DE MATÉRIAU EN VRAC

(43) Date of publication of application: 12.08.2015
(73) Proprietor: Outotec (Finland) Oy, 02230 Espoo (FI)
(72) Inventor: SCHULAKOW-KLASS, Andrej, 65189 Wiesbaden (DE); MANTHEY, Pierre, 61440 Oberursel (DE); SCHMIDT, Eugen, 64331 Weiterstadt (DE); BRUDNYJ, Edgar, 60313 Frankfurt am Main (DE)
(74) Representative: Keil & Schaafhausen Patent- und Rechtsanwälte PartGmbB
(86) International application number: PCT/EP2012/069845
(87) International publication number: WO 2014/056519

(56) References cited:
- EP-A1- 0 463 666
- EP-A1- 1 195 565
- DE-U1- 20 308 160

## Description

The invention relates to a machine for the thermal treatment of bulk material, in particular a sintering or pelletizing machine, comprising a traveling grate with a plurality of pallet cars, that are conveyed through at least one treatment station for effecting the thermal treatment of the bulk material, and a sealing structure sealing the pallet cars against the machine, wherein the sealing structure comprises a spring-loaded sealing strip contacting a planar sealing surface.

In pelletizing or sintering plants the bulk material to be treated, for example iron ore or zinc ore, is charged onto pallet cars forming an endless chain also referred to as "traveling grate". The pallet cars are filled with the bulk material and pass through various treatment stations of a furnace, in which the material is thermally treatment, e.g., heated, dried, fired and cooled. Usually, wind boxes are provided below the traveling grate sucking hot air through the bulk material located on top of the pallet cars.

A standard problem of known sintering or pelletizing machines is so-called false air which is not sucked through the material to be treated, but for example through the space between the wind boxes and the support means for the traveling grates. Further, it should be avoided that gases escape from the furnace through gaps provided between the furnace hood and the traveling grate.

Various measures have been proposed to reduce the quantity of false air. As described in documents AT 290858 or EP 0 463 666 A1 a sintering machine may be provided with one or more bars under each pallet car, which bars are urged in the direction of a guide way connected to the fixed structure by spring force. Guide way and bar together provide a gastight seal. The sealing force is provided by gravity due to the weight of the loaded pallet car and the pressure spring. Still, however, there is a certain leakage between the sealing body and the fixed structure.

EP 1 195 565 A1 describes a method and device for sealing a pressurized gas blow hood above a sintering raw mix bed. On the skirt lower edge of the blow hood, a sealing piece composed of a composite material comprising hard rigid body tips and an elastic body member is provided. The sealing piece is in sliding contact with the raw mix bed. Further springs can be used for improving the followability and sliding contactability of the sealing piece with the surface of the sintering raw mix bed.

DE 203 08 160 U1 discloses an annealing hood for the heat treatment of semifinished products and workpieces. A flange is provided at the lower, open end of the annealing hood. The flange lies against a base and seals the interior of the interior to prevent inert gas from escaping. The flange has a connection zone which is curvilinear and elastically deformable. Hence the connection zone is able to absorb mechanical stresses resulting from different thermal expansions of the hood mantle and the mantle flange.

A lot of effort has to be taken to minimize the gaps necessary for the movement of the sealing bodies within the housing. If a simple slide seal without additional pressure force is used, the sealing effect results from the surface contact between the sealing strip and the sealing surface. Efficiency of this sealing structure, however, is reduced over time as the sealing means were down and sufficient contact cannot be secured. Further, the sealing strips have to be provided on each pallet car increasing the equipment costs. Actually, however, the sealing effect has to be provided only when the pallet cars pass the furnace, while the sealing strips are without any function over at least half their travel path when they are returned upside down along a bottom strand to the lifting wheel.

It is, therefore, the object of the present invention to provide for a reliable seal between the traveling grate and the fixed structure of a sintering or pelletizing machine. Further, the equipment costs should be reduced.

According to the present invention there is provided a machine comprising the features of claim 1. In particular, the sealing strip is held by at leaf-spring element biasing the sealing strip against the sealing surface.

The leaf-spring element combines the previously separated functions of providing the sealing force and guiding and holding the sealing strip. This integral structure reduces leakages necessarily related to previous solutions using gravity. It is necessary to seal against the primary sealing gap only that is formed between the moving pallet cars and the fixed structure of the sintering or pelletizing machine.

Another advantage of using leaf-springs is that they provide a torsional and lateral flexibility to the sealing system so that it is possible to absorb the constantly present lateral movement of the pallet cars without damage to the sealing system.

According to the present invention the leaf-spring elements are mounted to the fixed structure of the machine, in particular a frame provided below the traveling grate and/or a hood provided above the traveling grate, while in both cases the sealing surface is provided on the pallet cars. As a result the sealing structure can be provided below the traveling grate to seal against the wind boxes, but also above the traveling grate if a hood is provided. Wind boxes are present in sintering and pelletizing plants while hoods are presently primarily used in pelletizing plants only. There is, however, a trend to use hoods in sintering plants as well. As the leaf-spring elements are provided on a stationary sections of the plant only it is possible to provide the sealing systems within the processing zones only and to thereby reduce the number of sealing systems by more than 50% as compared with the prior art providing a sealing systems on each pallet car.

Preferably leaf-springs are formed in a U-shape representing the simplest design, which can be manufactured easily and allows simple installation. Other forms, such as e.g. double U-shapes, V-, W-, or L-profiles would be possible as well. While the used profile can be adapted to the specific requirements in the sintering or pelletizing machines, the production of the above mentioned alternative profiles is more complex and they require a larger installation space.

In view of the high temperatures present in sintering and pelletizing machines, the leaf-spring elements should be formed from a thermally resistant material, such as 1.4568, 1.4451, 1,4571, 1.45301, etc. with high stiffness properties at high temperature level according to standard EN 100088-2.

It is part of the present invention that the leaf-spring element is pre-stressed so that besides reacting to the weight of the pallet cars it provides an active pressure load to increase the sealing effect. This is in particular relevant with regard to the sealing against the hood provided above the traveling grate.

In order to facilitate maintenance work and reduce costs, several consecutive leaf-spring elements and or sealing strips are provided along the length of the treatment stations. In case of damage, only the relevant sections need to be exchanged. Further, the heat treatment sections in sintering and pelletizing plants often are very long so that it would be very difficult to provide integral leaf-spring elements or sealing strips extending along the total length of the heat treatment sections.

To avoid leakage between consecutive leaf-spring or sealing elements, the invention provides that adjacent leaf-spring elements and/or sealing strips overlap in the vertical and/or the horizontal direction. Thereby, gaps between adjacent sealing systems are closed or covered. Further, the overlap provides for a formfit connection between the sealing segments which enhances the stability and force bearing ability over the total length to be sealed.

In addition or as an alternative to an overlap of adjacent leaf-spring elements a connecting member may be provided between adjacent leaf-spring elements to seal the gaps therebetween and to provide for a stable connection.

If the spring force of the leaf-spring element is reduced due to the high temperature environment, it is possible to provide additional pressure springs within the leaf-spring elements to assist the biasing force thereof or to use leaf-spring elements having a higher modulus of resilience (spring constant) in specifically stressed regions.

The system according to the present invention provides for considerable advantages in the reliability of the sealing system and reduces the equipment costs as the surfaces on the pallet cars that need to be processed are minimized and as the number of sealing system is decreased dramatically. The new system requires less than half the number of sealing systems that was considered necessary in the prior art as they now need to be provided in the process areas only and no longer on each pallet car.

The invention will now be described on the basis of preferred embodiments shown in the drawing. All features described and/or illustrated form the subject matter of the present invention *per se* or in any combination, independent of their inclusion in the claims or their back-reference.

In the drawing:
- Fig. 1: schematically shows a pelletizing machine with travelling grate,
- Fig. 2: schematically shows a section of the plant including a pallet car, a wind box and the sealing system provided therebetween,
- Fig. 3: shows an enlarged part of Fig. 2 illustrating the sealing system,
- Fig. 4: is a perspective partial view of the sealing system in Fig. 2,
- Fig. 5: is an enlarged partial view of the sealing system shown in Fig. 4,
- Fig. 6: is a perspective partial view of the sealing system provided between the pallet car and the hood,
- Fig. 7: shows an enlarged partial cross section through the sealing system in Fig. 6.

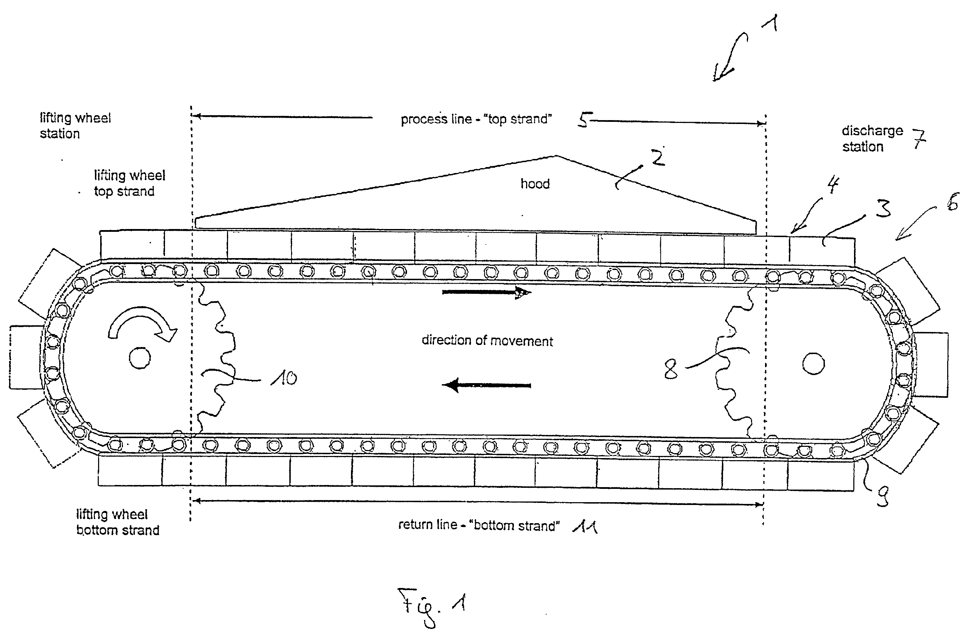

By way of example, Fig. 1 shows a pelletizing machine 1 for producing ore pellets, in which the invention is employed. The invention is equally suitable to be used in sintering machines or other machines thermally treating bulk material by sucking or blowing air or other fluid substances therethrough.

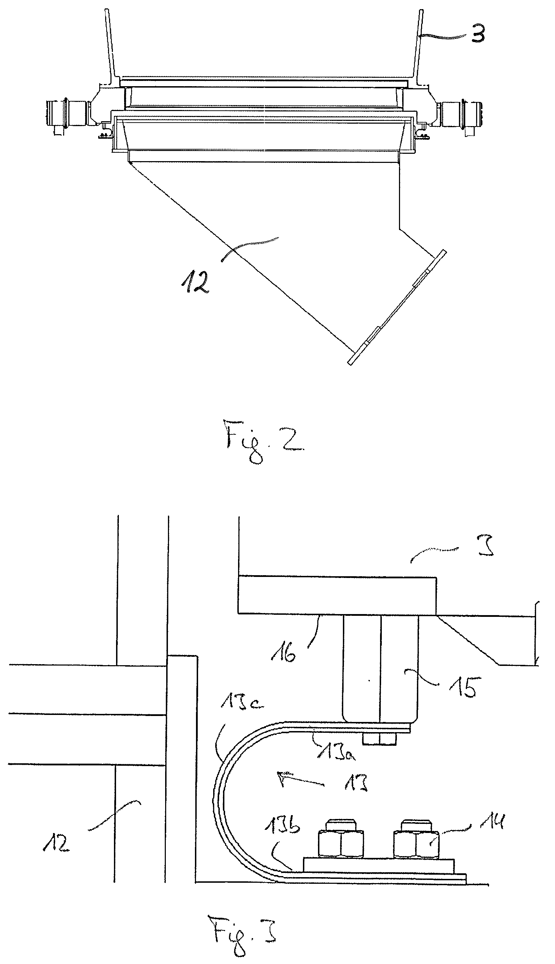

At a non-illustrated supply station under a hood 2, the bulk material is charged onto pallet cars 3 forming an endless pallet car chain referred to as "traveling grate" 4. Under the hood 2, the bulk material transported on the pallet cars 3 passes through a plurality of thermal treatment stations in which the bulk material is, e.g., dried, preheated, fired and finally cooled again. In particular, air is sucked through the bulk material carried on the pallet cars 3 by wind boxes not shown in Fig. 1, which are provided below the traveling grate 4 (see Fig. 2). At the treatment stations under the hood 2, the traveling grate 4 is guided on a top strand 5 of a continuous conveyor 6. After passing through the hood 2, the pallet cars 3 of the traveling grate 4 reach a discharge or tipping station 7 associated to a driven or tipping wheel 8 of the continuous conveyor 6. There, the pallet cars 3 are tilted, so that their load is dumped by gravity. Since the pallet cars 3 are guided by a guide rail 9, they do not fall down themselves but are returned upside down to the lifting wheel 10 in a bottom strand 11 of the continuous conveyor 6. In normal operation, the traveling grate 4 circulates endlessly on the continuous conveyor 6 and transports the bulk material through the treatment stations under the hood 2 before it is dumped at the discharge or tipping station 7 and further processed in a way not described here in detail.

As shown in Fig. 2, below the traveling grate 4 there is provided a wind box 12 sucking hot air provided in hood 2 through the bulk material carried on the pallet car 3. In order to avoid the sucking in of false air between the upper end of the wind box 12 and the pallet cars 3, a sealing system is provided which is shown in more detail in Fig. 3. On a lateral top surface of the wind box 12 a leaf-spring element 13 is mounted by bolts 14 or any other suited mounting elements. The leaf-spring element 13 has an upper arm 13a and a lower arm 13b connected by a connecting section 13c so that the leaf-spring element has a U-shaped cross-section. On its upper surface the leaf-spring element 13 supports a sealing strip 15 made of a wear resistant material, in particular special iron alloy, cast iron or general material (iron or plastic or any combination of them) with high resistant properties and low friction coefficient. On the stationary sealing strip 15 a processed lower sealing surface 16 provided on the bottom side of each pallet car 3 slides during movement of the pallet car 3.

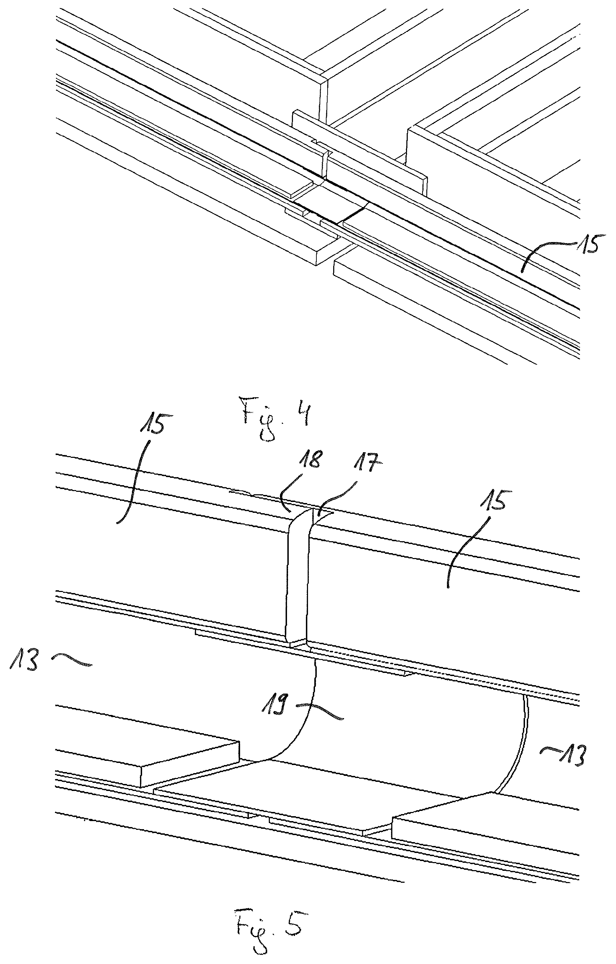

As evident from Fig. 4 an 5, several consecutive leaf-spring elements 13 and sealing strips 15 are provided along the length of the treatment stations in the pelletizing machine 1. In order to avoid the entry of false air in gaps between adjacent sealing segments, adjacent sealing strips 15 overlap in the vertical and/or horizontal direction. As shown in Fig. 4 and 5, the vertical overlap between adjacent sealing segments is provided by corresponding recesses 17 and protrusions 18 formed on respective ends of the sealing strips 15 and/or leaf-spring elements 13. In particular for the relatively thin leaf-spring elements 13 the overlap may also be provided by a connecting member 19 connecting adjacent leaf-spring elements 13 and closing any gap therebetween.

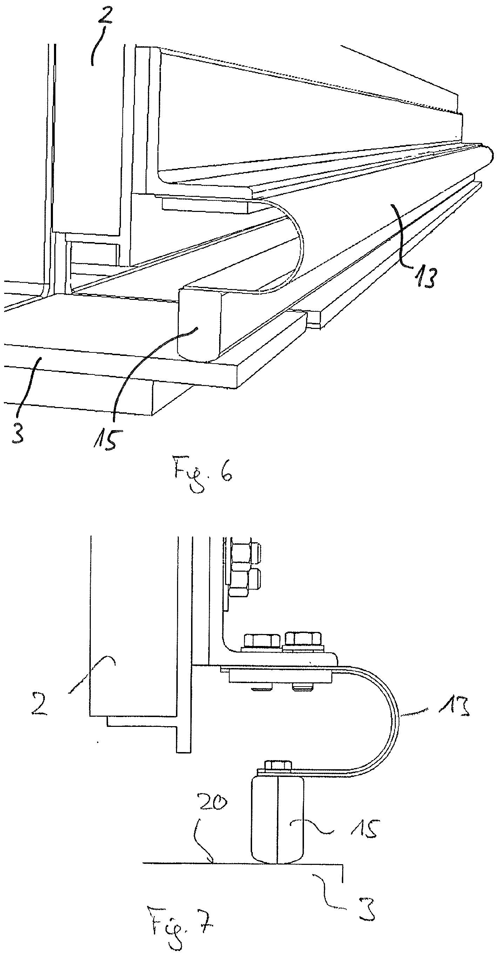

Fig. 6 and 7 schematically shows the sealing system provided between the pallet cars 3 and the hood 2 located above the traveling grate 4. The structure of the sealing system basically is the same as that of the sealing system provided between the pallet cars 3 and the wind box 12 as described with regard to Figures 3 to 6. Corresponding elements, therefore, are designated using the same reference numbers and a redundant description thereof shall be omitted. The sealing strip 15 provided between the leaf-spring element 13 and the upper surface of the pallet car 3 rests on an upper sealing surface 20 of the pallet car 3. Here, the spring loaded pressure acting through the leaf-spring elements 13 on the sealing strip 15 is even more important than in the sealing system provided for the gap between the pallet cars 3 and the wind box 12 because above the pallet car 3 the sealing is not assisted by gravity due to the weight of the loaded pallet cars 3.

In order to compensate for a reduction of the biasing force of the leaf-spring elements 13 due to thermal stresses in the heat treatment process, additional pressure springs (not shown) may be provided between the upper and lower arms 13a, 13b of the leaf-spring element 13. Alternatively, leaf-spring elements having a higher spring constant may be provided in such regions.

In the drawing the leaf-spring elements 13 are shown to have a U-shape. This is the most preferred design of the elements 13. It is, however, also possible to use other shapes, in particular a double U-shape, a V-shape, a W-shape or an L-shape.

With the invention, it is possible to simplify the sealing structures provided in sintering or pelletizing machines wherein a continuous sealing force can be provided due to the resilient leaf-spring. As the functions of the force introduction and guidance of the sealing elements are combined, a closed structure is possible completely avoiding the sucking in of false air or leakage of air into the furnace. The torsional and bending properties of the leaf-spring elements absorb the lateral movement of the pallet cars by deformation without damage to the sealing system or the pallet cars.

Economically, there are considerable advantages in comparison to the known sealing systems as the number of sealing systems can be reduced by at least 50 % since they have to be provided only in the processing region of the machine but not on every pallet car.

### List of reference numbers:

- 1: pelletizing machine
- 2: hood
- 3: pallet car
- 4: traveling grate
- 5: top strand
- 6: conveyer
- 7: tipping station
- 8: tipping wheel
- 9: guide rail
- 10: drive wheel or lifting wheel
- 11: bottom strand
- 12: wind box
- 13: leaf-spring element
- 13a: upper arm
- 13b: lower arm
- 13c: connecting section
- 14: bolt
- 15: sealing strip
- 16: lower sealing surface
- 17: recess
- 18: protrusion
- 19: connecting member
- 20: upper sealing surface

## Claims

1. Machine for the thermal treatment of bulk material, in particular a sintering or pelletizing machine, comprising a travelling grate (4) with a plurality of pallet cars (3), that are conveyed through at least one treatment station for effecting the thermal treatment of the bulk material, and a sealing structure sealing the pallet cars (3) against the machine, wherein the sealing structure comprises a spring-loaded sealing strip (15) contacting a planar sealing surface (16, 20), **characterized in that** the sealing strip (15) is held by a leaf-spring element (13) biasing the sealing strip (15) against the sealing surface (16, 20) and **in that** leaf-spring elements (13) are mounted to a frame of the machine and/or to a hood (2) provided above the travelling grate (4) and that the sealing surface (16, 20) is provided on the pallet cars (3).

2. Machine according to claim 1, **characterized in that** the leaf-spring element (13) is formed in a U-, a double U-, a V-, a W- or an L-shape.

3. Machine according to any of the preceding claims, **characterized in that** the leaf-spring element (13) is formed from a thermally resistant material.

4. Machine according to any of the preceding claims, **characterized in that** the leaf-spring element (13) is prestressed.

5. Machine according to any of the preceding claims, **characterized in that** an additional pressure spring is provided within the leaf-spring element (13).

6. Machine according to any of the preceding claims, **characterized in that** leaf-spring elements (13) with different strength are provided over the length of the treatment stations.

7. Machine according to any of the preceding claims, **characterized in that** along the length of the treatment stations several consecutive leaf-spring elements (13) and/or sealing strips (15) are provided.

8. Machine according to claim 7, **characterized in that** adjacent sealing strips (15) and/or leaf-spring elements (13) overlap in the vertical and/or the horizontal direction.

9. Machine according to claim 7 or 8, **characterized in that** a connecting member (19) is provided between adjacent leaf-spring elements (13).

## Patentansprüche

1. Maschine zur thermischen Behandlung von Schüttgut, insbesondere eine Sinter- oder Pelletiermaschine, mit einem Wanderrost (4) mit einer Mehrzahl von Rostwagen (3), welche durch wenigstens eine Behandlungsstation gefördert werden, um die thermische Behandlung des Schüttgutes durchzuführen, und mit einer Dichtanordnung, welche die Rostwagen (3) gegenüber der Maschine abdichtet, wobei die Dichtanordnung einen federbelasteten Dichtstreifen (15) aufweist, welcher eine ebene Dichtfläche (16, 20) berührt, **dadurch gekennzeichnet, dass** der Dichtstreifen (15) durch ein Blattfederelement (13) gehalten wird, welches den Dichtstreifen (15) gegen die Dichtfläche (16, 20) vorspannt, und dass Blattfederelemente (18) an einem Rahmen der Maschine und/oder einer Haube (2), die oberhalb des Wanderrostes (4) vorgesehen ist, angebracht sind, und dass die Dichtfläche (16, 20) an dem Rostwagen (3) vorgesehen ist.

2. Maschine nach Anspruch 1, **dadurch gekennzeichnet, dass** das Blattfederelement (13) in einer U-, einer Doppel-U-, einer V-, einer W- oder einer L-Form ausgebildet ist.

3. Maschine nach einem der vorhergehenden Ansprüche, **dadurch gekennzeichnet, dass** das Blattfederelement (13) aus einem thermisch resistenten Material geformt ist.

4. Maschine nach einem der vorhergehenden Ansprüche, **dadurch gekennzeichnet, dass** das Blattfederelement (13) vorgespannt ist.

5. Maschine nach einem der vorhergehenden Ansprüche, **dadurch gekennzeichnet, dass** eine zusätzliche Druckfeder in dem Blattfederelement (13) vorgesehen ist.

6. Maschine nach einem der vorhergehenden Ansprüche, **dadurch gekennzeichnet, dass** Blattfederelemente (13) mit unterschiedlichen Festigkeiten über die Länge der Behandlungsstationen vorgesehen sind.

7. Maschine nach einem der vorhergehenden Ansprüche, **dadurch gekennzeichnet, dass** entlang der Länge der Behandlungsstationen mehrere aufeinanderfolgende Blattfederelement (13) und/oder Dichtstreifen (15) vorgesehen sind.

8. Maschine nach Anspruch 7, **dadurch gekennzeichnet, dass** benachbarte Dichtstreifen (15) und/oder Blattfederelemente (13) in der vertikalen und/oder der horizontalen Richtung überlappen.

9. Maschine nach Anspruch 7 oder 8, **dadurch gekennzeichnet, dass** ein Verbindungselement (19) zwischen benachbarten Blattfederelementen (13) vorgesehen ist.

## Revendications

1. Machine de traitement thermique de matières en vrac, en particulier une machine de frittage ou de bouletage, comprenant une grille mobile (4) avec une pluralité de chariots à palettes (3) transportés à travers au moins une station de traitement pour l'exécution du traitement thermique des matériaux en vrac, et une structure d'étanchéité destinée à sceller les chariots à palettes (3) par rapport à la machine, la structure d'étanchéité comprenant une bande d'étanchéité précontrainte par ressort (15) touchant une surface d'étanchéité planaire (16, 20), **caractérisée en ce que** la bande d'étanchéité (15) est maintenue par un élément de ressort à lame (13) sollicitant la bande d'étanchéité (15) contre la surface d'étanchéité (16, 20), et **en ce que** des éléments de ressort à lame (13) sont montés sur un cadre de la machine et/ou sur un capot (2) prévu au-dessus de la grille mobile (4), et **en ce que** la surface d'étanchéité (16, 20) est prévue sur les chariots à palettes (3).

2. Machine selon la revendication 1, **caractérisée en ce que** l'élément de ressort à lame (13) présente une forme en U, en double U, en V, en W ou en L.

3. Machine selon l'une quelconque des revendications précédentes, **caractérisée en ce que** l'élément de ressort à lame (13) est constitué d'un matériau thermorésistant.

4. Machine selon l'une quelconque des revendications précédentes, **caractérisée en ce que** l'élément de ressort à lame (13) est précontraint.

5. Machine selon l'une quelconque des revendications précédentes, **caractérisée en ce qu'**un ressort de pression supplémentaire est prévu dans l'élément de ressort à lame (13).

6. Machine selon l'une quelconque des revendications précédentes, **caractérisée en ce que** des éléments de ressort à lame (13) avec des puissances différentes sont prévus le long des stations de traitement.

7. Machine selon l'une quelconque des revendications précédentes, **caractérisée en ce que** le long des stations de traitement, il est prévu plusieurs éléments de ressort à lame (13) et/ou bandes d'étanchéité (15) consécutifs.

8. Machine selon la revendication 7, **caractérisée en ce que** des bandes d'étanchéité (15) adjacentes et/ou des éléments de ressort à lame (13) adjacents se chevauchent dans la direction verticale et/ou horizontale.

9. Machine selon la revendication 7 ou 8, **caractérisée en ce qu'**un élément de liaison (19) est prévu entre des éléments de ressort à lame (13) adjacents.
